# EUROPEAN PATENT APPLICATION

(11) **EP 2 564 741 A1**
(43) Date of publication of application: **06.03.2013**
(21) Application number: 11191018.8
(22) Date of filing: 28.11.2011
(51) Int. Cl.: A47J 36/06

(54) **Lid Swiveling Mechanism**

(30) Priority: 30.08.2011 CN 201120319442 U; 14.10.2011 US 274195
(71) Applicant: Hong Guang Tempered Glass Ind. Co., Ltd., Jingmen, Guangdong 529100 (CN)
(72) Inventor: Dai, Jie, 529100 Jiangmen Guangdong (CN)
(74) Representative: Dunlop, Hugh Christopher

(57) **Abstract**

A detachable lid swiveling mechanism is a joint for a pot lid (4) and has a base (1) on a body (3) and a connecting piece (2) arranged on a pot lid (4). The base (1) has a blocking slot (5) having an insertion inlet (51), and the connecting piece (2) has a rotating shaft (72) movably passing in and out the blocking slot (5) through the insertion inlet (51) and matching with the blocking slot (5) to enable the pot lid (4) to rotate around the blocking slot (5). The blocking slot (5) of the lid swiveling mechanism of the present invention has an insertion inlet (51) through which the pot lid (4) can be easily connected with or detached from the pot body (3).

## Description

### FIELD OF THE INVENTION

The present invention relates to a lid swiveling mechanism for pot lid, in particular to a detachable lid swiveling mechanism for pot lid.

### DISCUSSION OF RELATED ART

Current cooking pots are formed by a pot body and a pot lid matched with the pot body, the pot body and the lid are independent to each other and without any connection, the lid just is directly taken off to expose the pot body. This makes the lid is inconvenient to place and often falls in haste cooking. The structure of the lid swiveling mechanism of the current cooking pot with a lid swiveling mechanism is too complicated, and the pot body is fixedly connected with the lid when having the lid swiveling mechanism, making the pots are difficult to clean because the lids can not be taken off.

### SUMMARY OF THE INVENTION

An object of the present invention is to overcome the defects of the prior art and provide a detachable lid swiveling mechanism for pot lid with simple structure and convenient disassembly.

In order to solve the problems of the prior art, the detachable lid swiveling mechanism for a pot lid of the present invention comprises a base disposed on a pot body and a connecting piece arranged on a pot lid. The pot body has a pot handle with an upper surface. A base is disposed on the upper surface of the pot handle of the pot body. The base is provided with a blocking slot having an insertion inlet, and the connecting piece is provided with a rotating shaft capable of movably passing in and out the blocking slot through the insertion inlet and matching with the blocking slot to enable the pot lid to rotate around the blocking slot.

The connecting piece is provided with a U-shaped rotating shaft seat which unites with the edge of the connecting piece to form a limiting structure is arranged on the connecting piece. The U-shaped rotating shaft seat is provided with two limiting arms for preventing the rotating shaft from sliding out the blocking slot, and the rotating shaft is disposed between the two limiting arms.

The tail end of the connecting piece is a limiting part which is buckle-connected to the outer wall of the blocking slot to enable the pot lid to erect on the pot body.

The base is disposed on a pot lug.

The connecting piece is provided with a mounting hole for facilitating connection between the connecting piece and the pot lid.

Compared with the prior art, the present invention has the following advantages:
The lid swiveling mechanism of the present invention makes the pot lid movably connected with the pot body by fitting the connecting piece to the base. The use is convenient because the blocking slot of the lid swiveling mechanism of the present invention is provided with an insertion inlet through which the pot lid is easily connected with and detached from the pot body, thereby greatly increasing the flexibility of connection between the pot lid and the pot body and effectively solving the problem of difficult cleaning of the current cooking pot with lid swiveling mechanism. The lid swiveling mechanism of the present invention has a simple structure, low manufacturing cost and complete functions, and is suitable for being mounted on any cooking pot.

### BRIEF DESCRIPTION OF THE DRAWINGS

FIG. 1 is a structural diagram of the present invention.
FIG. 2 is a structural diagram of the connecting piece.
FIG. 3 is a structural diagram of the present invention connecting to a pot lid.
FIG. 4 is a structural diagram of the present invention connecting to a cooking pot.

### DETAILED DESCRIPTION

The structure of the present invention will now be described in details, but is not limited to the embodiments disclosed.

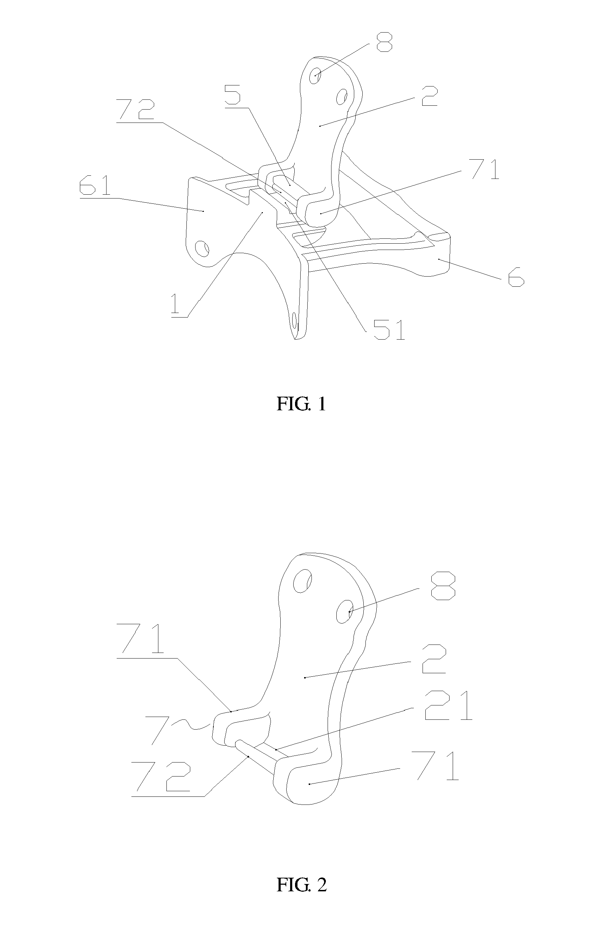

As shown in FIG. 1 to FIG. 3, a detachable lid swiveling mechanism for pot lid of the present invention comprises a base 1 and a connecting piece 2. The base 1 is disposed on a pot body 3, and the connecting piece 2 is arranged on a pot lid 4.

Referring to FIG. 1, the base 1 is provided with a blocking slot 5 having an insertion inlet 51, and a rotating shaft 72 of the connecting piece 2 can pass in and out the blocking slot 5 through the insertion inlet 51. In order to simplify the structure and reduce the working processes, the base 1 is arranged at a connecting part 61 of a pot lug 6.

One end of the connecting piece 2 is provided with a mounting hole 8 for facilitating connection between the connecting piece 2 and the pot lid 4. The other end is provided with a U-shaped rotating shaft seat 7 which has two limiting arms 71 for preventing the rotating shaft 72 from sliding out the blocking slot 5, and as shown in FIG. 2, the rotating shaft 72 is disposed between the two limiting arms 71.

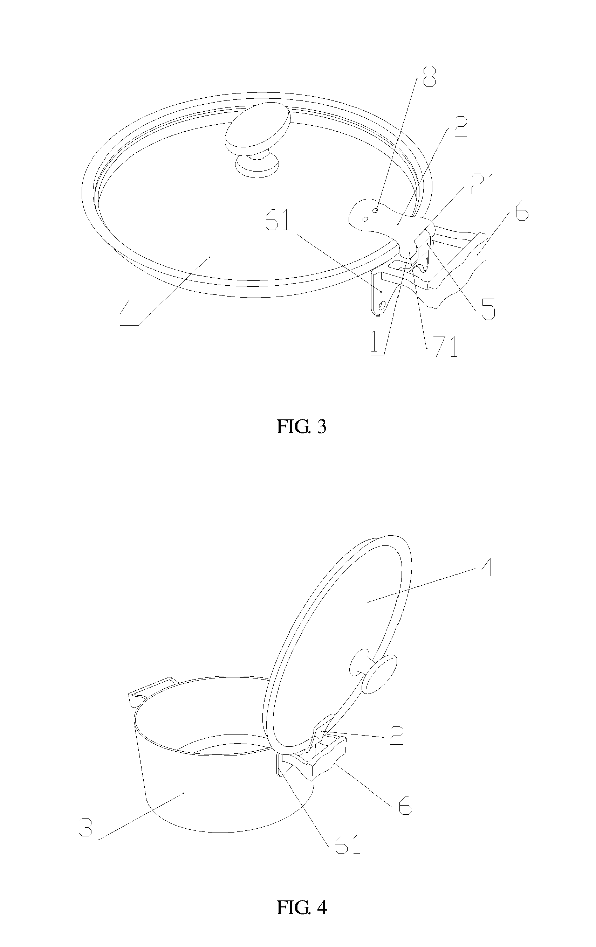

When the pot lid 4 needs to be connected to the pot body 3, the rotating shaft 72 can be put into the blocking slot 5 through the insertion inlet 51 and rotates by taking a hinge joint part as a pivot, a limiting part 21 at the tail end of the connecting piece 2 unites with the two limiting arms 71 to form a limiting structure, the two limiting arms 71 can prevent the rotating shaft 72 from sliding out the blocking slot 5 to enable the structure of the present invention to be more stable. The limiting part 21 is buckle-connected with the outer wall of the blocking slot 5 when the connecting piece 2 rotates around the blocking slot 5 till the pot lid 4 is erected on the pot body 3. As shown in FIG. 4, the pot lid 2 can be erected on the pot body 3 when being opened, and thus the use is very convenient.

The rotating shaft 72 is removed from the blocking slot 5 during cleaning.

The above-mentioned are the preferred embodiments of the present invention and are not intended to limit the present invention in any form. Therefore, any simple modifications or obvious changes of the above embodiments according to the technical essence of the present invention without departing from the technical solution of the present invention are seen to fall within the scope of the technical solution of the present invention.

## Claims

1. A detachable lid swiveling mechanism for a pot lid comprising:
a base adapted to be disposed on a pot body; and
a connecting piece adapted to be disposed on a pot lid,
wherein the base is provided with a blocking slot having an insertion inlet, and the connecting piece is provided with a rotating shaft capable of movably passing in and
out the blocking slot through the insertion inlet and matching the blocking slot to enable the pot lid to rotate around the blocking slot.

2. The detachable lid swiveling mechanism for a pot lid according to claim 1, wherein the connecting piece is provided with a mounting hole for facilitating connection between the connecting piece and the pot lid.

3. The detachable lid swiveling mechanism for a pot lid of claim 1, wherein the tail end of the connecting piece is a limiting part which is buckle-connected to the outer wall of the blocking slot to enable the pot lid to erect on the pot body.

4. The detachable lid swiveling mechanism for a pot lid according to claim 1, wherein the base is disposed on a pot lug.

5. The detachable lid swiveling mechanism for a pot lid of claim 1, further comprising: a U-shaped rotating shaft seat which unites with an edge of the connecting piece to form a limiting structure arranged on the connecting piece, wherein the U-shaped rotating shaft seat is provided with two limiting arms for retaining the rotating shaft in the blocking slot, and wherein the rotating shaft is disposed between the two limiting arms.

6. The detachable lid swiveling mechanism for a pot lid according to claim 5, wherein the tail end of the connecting piece is a limiting part which is buckle-connected to the outer wall of the blocking slot to enable the pot lid to erect on the pot body.

7. The detachable lid swiveling mechanism for a pot lid according to claim 5, wherein the base is disposed on a pot lug.

8. The detachable lid swiveling mechanism for a pot lid according to claim 5, wherein the connecting piece is provided with a mounting hole for facilitating connection between the connecting piece and the pot lid.

9. The detachable lid swiveling mechanism for a pot lid according to claim 1, wherein the base is adapted to be disposed on an upper surface of a pot handle of the pot body.

10. A pot, comprising:
a pot body;
a pot lid; and
a detachable lid swiveling mechanism in accordance with any of claims 1 to 9.

11. The pot of claim 10, wherein:
the pot body comprises a pot handle with an upper surface; and
the base is adapted to be disposed on the upper surface of the pot handle of the pot body.
